# EUROPEAN PATENT SPECIFICATION

(11) **EP 0 587 695 B1**
(45) Date of publication and mention of the grant of the patent: **18.12.1996**
(21) Application number: 92911891.7
(22) Date of filing: 02.06.1992
(51) Int. Cl.: B23C 5/22, B23D 61/04

(54) **HOLDER FOR INSERTS FOR SLOT MILLING CUTTERS**
SCHNEIDEINSATZHALTER FÜR EINSTECHFRÄSER
DISPOSITIF DE SERRAGE POUR LAME DE COUPE INSEREE DANS UNE FRAISEUSE A RAINURES

(30) Priority: 04.06.1991 SE 9101691
(43) Date of publication of application: 23.03.1994
(73) Proprietor: MIRCONA AB, S-801 33 Gävle (SE)
(72) Inventor: WLAJKO, Mihic, S-802 67 Gävle (SE)
(74) Representative: Nordén, J. Ake
(86) International application number: SE9200371
(87) International publication number: WO9221473

(56) References cited:
- DE-A- 1 803 817
- DE-B- 2 607 143
- FR-A- 1 562 449
- GB-A- 1 500 556
- GB-A- 2 095 599
- US-A- 785 583
- US-A- 3 693 224
- US-A- 4 492 140

## Description

This invention relates to holders for milling cutters and the like according to the precharacterising part of claim 1, i.e. arrangements for holding one or more cutting insert at a normally rotatable milling head wherein the insert or the inserts project radially from the milling head in order to allow the use thereof for milling a slot in a work piece.

### Background of the invention

Milling cutters having replaceable inserts are known since long time. One problem with known fastening and tightening devices at milling heads is that they need unacceptable large space especially in a direction towards or in the area at the free end of the milling head. Uptil now known constructions have neither given any acceptable solution of the problem of arranging essentially radially localized inserts immediately at the end face of the milling head and to utilize for such purposes small inserts of the kind more and more used today.

One example of a known milling cutter having replaceable inserts is shown in GB, B, 1 500 556. In the known arrangement each insert has a considerable axial length allowing the use of a rather wide and bulky clamp means loosely inserted into an outer cut away portion at the periphery of the milling cutter and arranged by means of a tangentially oriented screw engaging one side of the cut to be swung or pivoted towards an insert placed between an abutment at the opposite side of the cut around a head shaped projection of the clamp means inserted into an inner cut away portion and serving as a fulcrum for the entire clamp means. The known arrangement can be used for milling tools with inserts having a pronounced axial length as the screw arrangement demands a rather wide or thick clamp means and peripheral accessability.

It is, accordingly not possible to use the known arrangement for milling tools having narrow or thin radially protruding edged inserts of a type similar to the one used in connection with parting tools on turning operations at lathes.

From other field of the art is known an arrangement for fastening of replaceable teeth at circular saws. U.S. Patent No. 785,583 comprising the closest prior art discloses a circular saw having at its periphery a number of cuts defined by essentially radial side edges one of which protrudes circumferentially over part of the radially facing mouth of the cut to form an inwardly facing radial abutment. An essentially V shaped locking body is inserted into the cut, the inner end of such body movable received in a curved inner end of the cut, one leg of the body fitted inside the circumferentially protruding edge portion and being biassed by a wedge means radially movably inserted between said one leg and the one side of the cut, the other leg being arranged to engage a tooth insert placed between a seat at the other side of the cut and the said leg. On pressing or moving the wedge means the one way or the other, the locking body will be swung around its innermost portion to press or release the tooth insert towards and from respectively the opposide edge of the cut.

None of the known arrangements ensures a stability and exactness necessary for milling tools of the type herein referred to.

One aspect of the invention is to bring about a holder making it possible to use the small inserts also for radial positioning at milling heads where the inserts will be close to a free end face of the milling head.

This is achieved with a holder having the features of claim 1.

### Summary of the invention

Behind this invention lies the knowledge that inserts of the kind normally used on turning preferably for parting of work and cutting of slots, because of their narrow width would be very useful for milling purposes, e.g. on machining operations close to a face or corner where conventional milling heads do not reach.

According to the invention there is at the end face of a milling head or the like tool arranged a number of recesses corresponding to the intended number of inserts, such recesses being defined by walls or edges parallel with the rotational axis of the milling head one such a wall presenting a shape complimentary to the abutment face of the insert and such walls defining an outer portion opening radially and in one direction defined by the said abutment portion and one inner portion by a restricted passage communicating with the outer portion, wherein the inner portion on the same side as the abutment face has an obliquely arranged inwardly inclined wall portion. In each such recess arrangement there is a clamping body having a hook like projection intended to engage the abutment side of the insert and one head like projection connected therewith by a narrow neck portion and adapted to be received inside the inner portion of the recess; an edge portion of such clamping body head portion facing the inclined wall portion of the recess. Each clamping body receiving recess has at the bottom of the outer recess portion a threaded bore and the clamping bodies have each a conically hole for a receiving conically arranged head of a screw means to be threaded into the said bottom bore and the hole is so localized that by inserting the screw and allowing the head of the screw to engage the conical hole of the clamping body the latter will be moved sidewardly and in this way clamps an insert placed between the clamping body and the abutment portion of the outer recess. Simultaneously the engagement between the clamping body head portion and the inner recess portion allows the clamping body to swing inwardly towards the inner portion thereby also applying an inwardly directed pulling force on to the insert.

### Brief description of the drawings

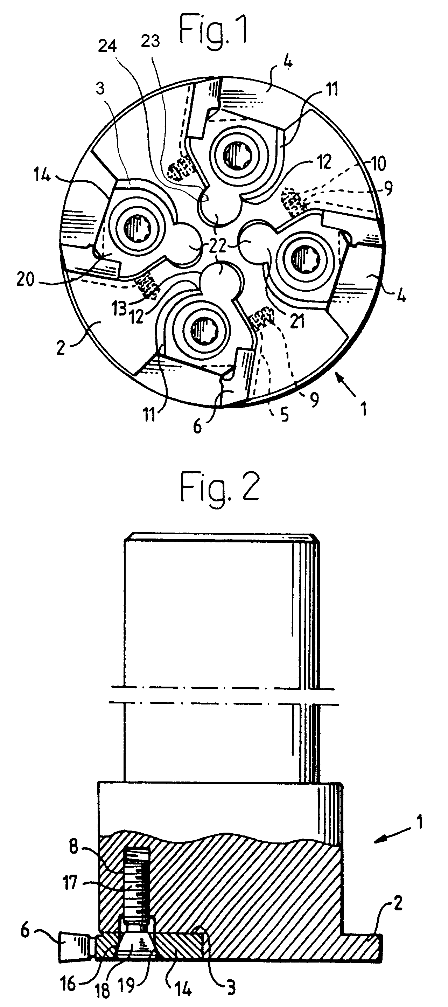

The invention will be described in details below with references to the attached drawing, on which
Figure 1 is a schematic end view of a milling head arranged with holders for radially oriented cutting inserts,
Figure 2 is a sectional view through the cutting head according to Figure 1.

A milling head is designated 1 and it has at its free end edge a flange like portion 2 like a flange protruding around the head proper. At the end face of the milling head there are a number, in the shown example four, recesses 3 and these have an axial depth which essentially corresponds with the width of the cutting inserts here. The recesses open radially outwardly by cuts 4 at the flange. One side of each recess and cut is shaped for forming a guiding and seat portion 5 for one per se known insert 6 and has therefore an essentially radially arranged V-groove, the majority of which is at the protruding edge flange 2. At the bottom of each recess there is a threaded bore 8 and in a wall portion adjacent the abutment portion a seat 9 for a spring 10.

Each recess is formed by an outer portion 11 and an inner portion 13 with an intermediary narrowing 12.

One clamp body designated 14 is intended to coact with each recess in order to clamp the insert 6 and this clamping body has an opening 16 with a conical surrounding surface through which a tightening screw 17 with a head 18 having a conical abutment face 19 is intended to run. The clamping body 14 has a protruding notch 20 intended to engage the free side of the insert shaft and has besides that a head portion 22 and an intermediary neck portion 21, the shape of the head portion adapted to fit into the inner portion of the recess and allow movements of the head portion inside the same. Accordingly the inner recess portion has adjacent the narrowing 12 an obliquely arranged inwardly sloping wall portion 23 and the portion 24 of the clamping body localised adjacent same is intended to engage such wall portion.

The threaded bore 8 is so localised relatively to the hole 16 for the screw head at the clamping body that on tightening the screw the clamping body 14 will be displaced by a large force towards one insert 6 placed at the abutment portion 5 and towards the same side of the narrowing 12.

In this way the insert will be pressed firmly against its abutment portion and simultaneously, because of the interaction between the clamping body head portion and the obliquely arranged wall portion 23 adjacent the narrowing 12 be subjected to an inwardly pulling force pulling the clamping body and the insert 6 inwardly towards the center of the milling head. The clamping body 14 only touches the milling head at two points, at the insert and at the obliquely arranged inwardly sloping wall portion 23, simultaneously as its outer portion is biassed by the tightening screw. This results in a safe stable holding of the insert which also is secured against pulling movements radially out wardly.

The invention is not to be regarded as limited to the embodiment described and shown on the drawings but can be modified in a number of ways within the scope of the following claims.

## Claims

1. Holder for cutting inserts for milling cutters and the like tools, especially for the milling of slots, including the milling cutter head, abutment portions arranged thereon, clamping means of engaging the inserts and tightening means such as screws for same, wherein a number of recesses (3) corresponding to the given number of cutting inserts (6) are arranged at a free end face of the cutter head (1), each such recess having an axial width essentially corresponding to the width of each cutting insert (6), and formed by an inner portion (13) closed but for a narrow connection (12) towards an outer portion (11) open radially outwardly, said outer portion having at one side thereof a seat portion (5) for a cutting insert and being adapted to receive a clamping body (14) with a head like projection to be received in the inner recess portion (13), a neck portion engaging the narrow connection and an abutment portion at the clamping body for engaging a cutting insert, **characterized** in that each of the recesses (3) which is open in the one axial direction only and adapted to receive a cutting insert (6) for cutting slots and the like, has an obliquely arranged edge or wall portion adjacent the narrow connection between the recess portions, intended for cooperation with an edge portion adjacent the head side of the neck of the clamping body (14), that the bottom of the recess forming a closed side thereof presents a threaded bore (8) for a screw means (17) to be fitted through a hole in the clamping body and threaded into said bore, the edge of the clamping body hole as well as the lower side of the head (18) of the screw means (17) being conical, and that the dimensions and the localization to the threaded bottom bore (8) and the clamping body hole (16) the obliquely arranged recess edge or wall portion (23) and the opposing clamping body edge portion (24), being such that on tightening of the screw means (17) the clamping body edge portion engaging the obliquely arranged recess edge portion causes the clamping body (14) to rock over the neck (22) and restricted portion (12) to press the cutting insert (6) towards the recess seat portion (5).

2. Holder according to claim 1, **characterized** by a seat or the like for a spring arranged at a wall portion adjacent the outer recess portion at the same side as the abutment portion (5) for the insert, said spring intended to counteract the interaction between the conical head of the screw and the conical surface around the hole resulting in lateral displacement of the clamping body (14) and to serve as a return means.

3. Holder according to claim 1 or 2, **characterized** in that the size of the clamping body head (22) relatively to the size of the inner recess portion (13) allowing the clamping body to be displaced in different direction but is so adapted that the cross extention of said head portion is larger than the width of the restriction.

## Patentansprüche

1. Haltevorrichtung für Schneideinsätze für Frässchneider und ähnliche Werkzeuge, insbesondere zum Fräsen von Schlitzen, mit einem Frässchneider-Kopf daran ausgebildeten Auflageabschnitten, Klemmeinrichtungen zum Eingriff mit den Einsätzen, sowie Befestigungseinrichtungen, wie z.B. Schrauben, wobei eine Anzahl von Aussparungen (3) entsprechend einer gegebenen Anzahl von Schneideinsätzen (6) an einer freien Endfläche des Schneidkopfes (1) angeordnet ist und jede Aussparung eine axiale Breite aufweist, die im wesentlichen der Breite jedes Schneideinsatzes (6) entspricht und durch einen inneren Abschnitt (13) gebildet ist, der mit Ausnahme einer schmalen Verbindung (12) in Richtung auf einen äußeren radial nach außen offenen Abschnitt (11) geschlossen ist, wobei der äußere Abschnitt an seiner einen Seite einen Sitz (5) für einen Schneideinsatz aufweist und zur Aufnahme eines Klemmkörpers (14) angepaßt ist, der einen kopfähnlichen, in dem inneren Abschnitt (13) der Aussparung aufzunehmenden Vorsprung, einen mit der schmalen Verbindung eingreifenden Halsabschnitt und einen Auflageabschnitt an dem Klemmkörper zum Eingriff mit einem Schneideinsatz aufweist,
dadurch gekennzeichnet, daß jede Aussparung (3), die nur in der einen axialen Richtung offen und zur Aufnahme eines Schneideinsatzes (6) zum Schneiden von Schlitzen und ähnlichen angepaßt ist, einen schräg angeordneten Kanten- oder Wandabschnitt benachbart zu der schmalen Verbindung zwischen den Aussparungsabschnitten aufweist, der zum Zusammenwirken mit einem Kantenabschnitt benachbart zu der Kopfseite des Halses des Klemmkörpers (14) vorgesehen ist, daß der Boden der Aussparung, der eine geschlossene Seite bildet, eine mit einem Gewinde versehene Bohrung (8) für eine konische Schraubeneinrichtung (17) aufweist, die durch ein Loch in dem Klemmkörper zu führen und in die Bohrung einzuschrauben ist, wobei die Kante des Klemmkörperlochs sowie die untere Seite des Kopfes (18) der Schraubeneinrichtung (17) konisch sind, und daß die Abmessungen und die Positionierung des mit einem Gewinde versehenen Bodenlochs (8) und des Klemmkörperlochs (16), sowie der schräg angeordneten Aussparungskante oder des Wandabschnitts (23) und des gegenüberliegenden Kantenabschnitts (24) des Klemmkörpers so gestaltet sind, daß beim Festziehen der Schraubeneinrichtung (17) der Kantenabschnitt des Klemmkörpers, der mit dem schräg angeordneten Kantenabschnitt der Aussparung eingreift, bewirkt, daß der Klemmkörper (14) über den Hals (22) greift und der begrenzte Abschnitt (12) den Schneideinsatz (6) in Richtung auf den Sitz (5) der Aussparung drückt.

2. Haltevorrichtung nach Anspruch 1,
gekennzeichnet durch einen Sitz oder ähnliches für eine Feder, die an einem Wandabschnitt benachbart zu dem äußeren Abschnitt der Aussparung an der gleichen Seite wie der Auflageabschnitt (5) für den Einsatz angeordnet ist, wobei die Feder dazu vorgesehen ist der Wechselwirkung zwischen dem konischen Kopf der Schraube und der konischen Fläche um das Loch entgegenzuwirken, die zu einer seitlichen Verschiebung des Klemmkörpers (14) führt und somit als eine Rückstelleinrichtung dient.

3. Haltevorrichtung nach Anspruch 1 oder 2,
dadurch gekennzeichnet, daß die Abmessungen des Kopfes (22) des Klemmkörpers relativ zu den Abmessungen des inneren Abschnitts (13) der Aussparung eine Verschiebung des Klemmkörpers in eine andere Richtung ermöglichen, jedoch so angepaßt sind, daß die Querausdehnung des Kopfabschnitts größer ist, als die Breite der Begrenzung.

## Revendications

1. Dispositif de maintien pour inserts de coupe pour fraiseuses et outils analogues, notamment pour le fraisage de rainures, comprenant la tête de fraisage, les parties de butée prévues dessus, les moyens de serrage d'engagement, les inserts et des moyens de fixation tels que des vis pour ceux-ci, dans lequel un certain nombre d'évidements (3) correspondant au nombre donné d'inserts de coupe (6) sont prévus au niveau d'une face d'extrémité libre de la tête de coupe (1), chaque évidement de ce type présentant une largeur axiale correspondant essentiellement à la largeur de chaque insert de coupe (6), et formé par une partie interne (13) fermée à l'exception d'une liaison étroite (12) en direction d'une partie externe (11) ouverte radialement vers l'extérieur, ladite partie externe présentant au niveau d'un côté de celle-ci une partie de siège (5) pour un insert de coupe et étant adapté à recevoir un corps de serrage (14) avec une saillie en forme de tête devant être reçue dans la partie d'évidement interne (13), une partie de col engageant la liaison étroite et une partie de butée au niveau du corps de serrage pour engager un insert de coupe, **caractérisé** en ce que chacun des évidements (3), qui est ouvert dans la seule direction axiale et adapté à recevoir un insert de coupe (6) pour la découpe de rainures et analogues, présente une partie de bord ou de paroi disposée obliquement de manière adjacente à la liaison étroite entre les parties d'évidement prévues pour coopérer avec une partie de bord adjacente au côté de tête du col du corps de serrage (14), en ce que le fond de l'évidement formant un côté fermé de celui-ci présente un alésage taraudé (8) pour un moyen à vis (17) devant être monté à travers un trou du corps de serrage et vissé dans ledit alésage, le bord du trou du corps de serrage ainsi que le côté inférieur de la tête (18) du moyen à vis (17) étant coniques, et en ce que les dimensions et la localisation par rapport à l'alésage de fond taraudé (8) ainsi que le trou (16) du corps de serrage, la partie de bord ou de paroi (23) de l'évidement disposée de manière oblique et la partie de bord (24) du corps de serrage opposé, étant telles que, lors de la fixation du moyen à vis (17), la partie de bord du corps de serrage engageant la partie de bord de l'évidement disposée de manière oblique amène le corps de serrage (14) à basculer sur le col (22) et la partie restreinte (12) à presser l'insert de coupe (6) vers la partie de siège (5) de l'évidement.

2. Dispositif de maintien selon la revendication 1, **caractérisé** par un siège ou analogue pour un ressort disposé au niveau d'une partie de paroi adjacente à la partie d'évidement externe du même côté que la partie de butée (5) pour l'insert, ledit ressort prévu pour réagir à l'interaction entre la tête conique de la vis et la surface conique autour du trou qui a pour résultat un déplacement latéral du corps de serrage (14) et pour servir de moyens de rappel.

3. Dispositif de maintien selon la revendication 1 ou 2, **caractérisé** en ce que la taille de la tête (22) du corps de serrage par rapport à la taille de la partie (13) de l'évidement interne permettant au corps de serrage d'être déplacé dans une direction différente est prévue de telle manière que l'extension transversale de ladite partie de tête est plus grande que la largeur de la partie restreinte.
